# EUROPEAN PATENT SPECIFICATION

(11) **EP 2 745 022 B1**
(45) Date of publication and mention of the grant of the patent: **20.07.2016**
(21) Application number: 12724072.9
(22) Date of filing: 27.04.2012
(51) Int. Cl.: F16C 11/06

(54) **BEARING HOUSE AND USE THEREOF**
LAGERGEHÄUSE UND SEINE VERWENDUNG
BOÎTIER DE PALIER ET UTILISATION DE CE BOÎTIER

(30) Priority: 17.08.2011 DK 201100619 P; 18.01.2012 DK 201200046 P
(43) Date of publication of application: 25.06.2014
(73) Proprietor: Kaltech Gearservice ApS, 2650 Hvidovre (DK)
(72) Inventor: LUND, Knud, A., DK 2860 Søborg (DK)
(74) Representative: Grünecker Patent- und Rechtsanwälte PartG mbB
(86) International application number: PCT/DK2012/000054
(87) International publication number: WO 2013/023659

(56) References cited:
- US-A- 1 853 121
- US-A- 3 030 134
- US-A- 3 703 761

## Description

The invention relates to a bearing house that has a connection part which is fixed to a piston rod, and where the bearing house has a centre line lying in a plane that comprises the connection part, and where the connection part has a longitudinal axis.

### Further the invention relates to use of the invention

Linear actuators are commonly fixed to moving machine elements by a spherical bearing that is mounted on a piston rod.

This will allow rotation about the longitudinal axis of the piston rod without affecting the actuator.

If however part of the moving elements are displaced in a radial motion, a non-wanted moment will be built up leading to bending stress in the actuator.

It is also noted that US patent no. US 3,030,134 discloses a bearing house accommodating a bearing according to the preamble of claim 1 in which the distance between the centre line of the spherical bearing and the longitudinal axis of the connection part is adjustable in order to compensate for wear. To adjusting the distance between the longitudinal axis and the centre line a somewhat complicated mechanical system is provided.

Now it is an object of the invention to eliminate this drawback.

The object is achieved by a bearing house of the type defined in the introductory part of claim 1, that is characterized in that the centre line is displaced in parallel in relation to the longitudinal axis.

Due to this, non-wanted moments will be eliminated, simply because the piston rod is rotated by an appropriate amount, when a moment is introduced in the actuator.

Expedient embodiments of the invention are outlined in the dependent claims.

As mentioned the invention also deals with the use of the invention.

The invention will now be more detailed described in connection with the accompanying drawing, in which
Fig. 1 illustrates a prior art spherical bearing.
Fig. 2 illustrates a bearing house according to the invention connected to a piston rod in a linear actuator which can be of any type, electric, pneumatic or hydraulic,
Fig. 3 illustrates the bearing house according to fig. 2 in a perspective view
Fig. 4 illustrates the bearing house in fig. 2 seen from above partly in cross section
Fig. 5 illustrates seen from the left in fig. 2 and in a cross section through the eye,
Fig. 6 illustrates the bearing house in perspective the fig. 2 version now seen in another state,
Fig. 7 illustrates the bearing house in fig. 5 seen from the right partly in cross section whereas
Fig. 8 illustrates the bearing house in fig 2, seen from above.

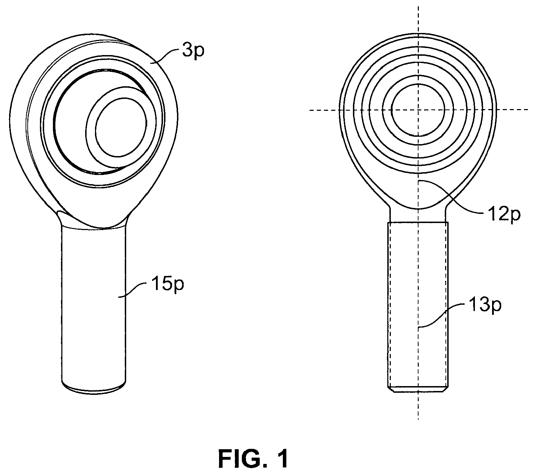

Fig. 1 shows a known spherical bearing consisting of house 3_{P} and a connection part 15_{P}.

From the right side of fig. 1 it is seen that the house has a centre line 12_{P}, whereas the connection part has a longitudinal axis 13_{P}.

From fig. 1 it is also seen that the centre line 12_{P} and the longitudinal axis 13_{P} is coincident.

In the other figures, 1 denotes a piston rod that is connected to a cylindrical tube 2 by a connection part 15.

The cylindrical tube 2 is fixed to a cylinder bracket 6 and a cylinder flange 7.

The cylinder bracket is fixed to a machine frame 5.

The distal end of the piston rod 2 is terminated by a bearing house 3 that accommodates a spherical bearing.

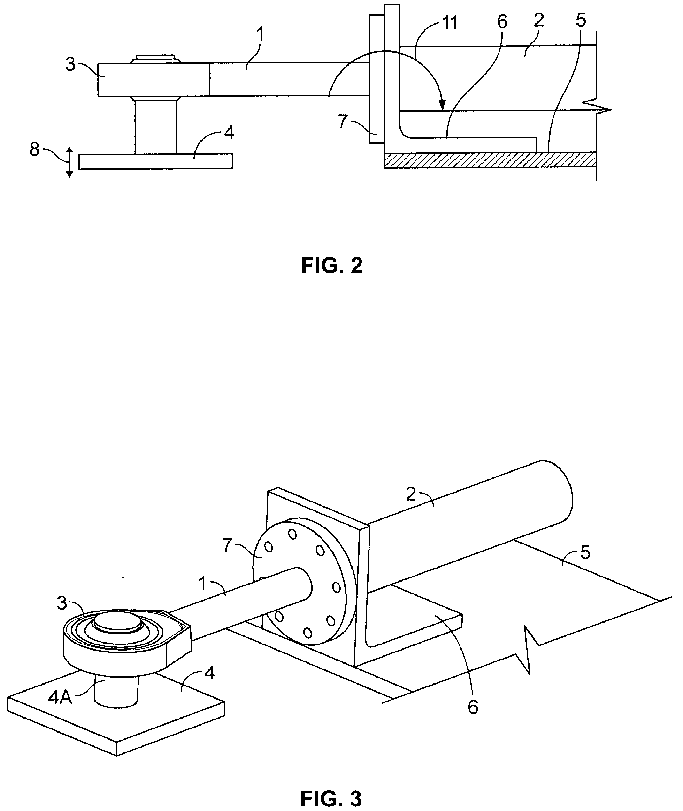

The bearing house is arranged on a moving part that consist of a plate 4 and a stud 4A as illustrated in fig. 3.

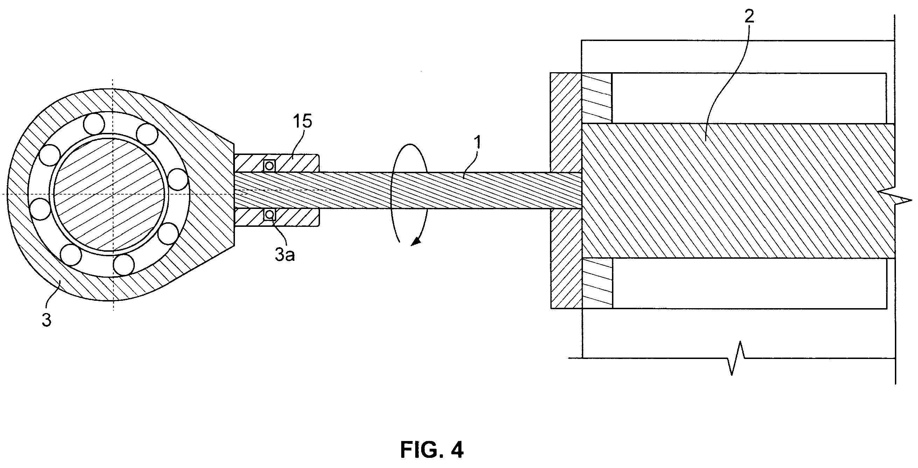

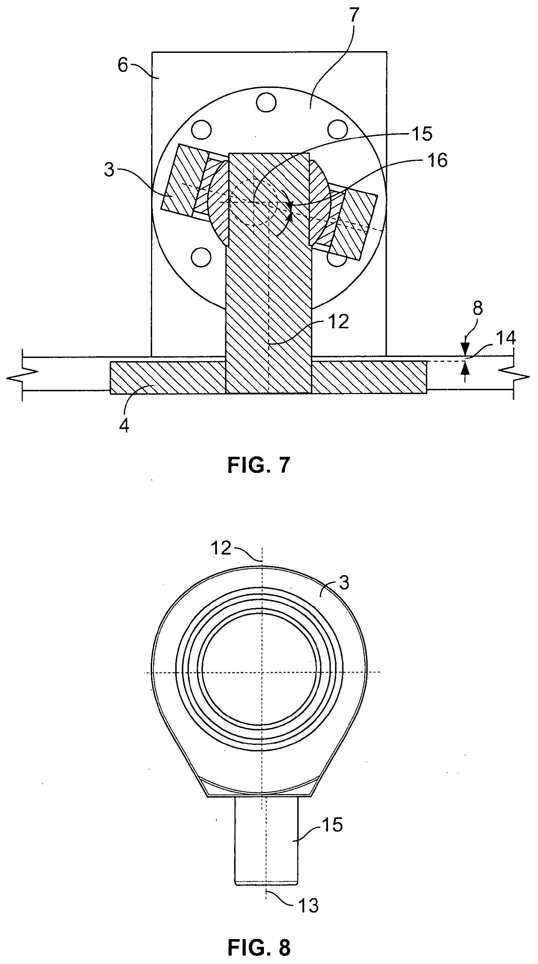

The bearing house is connected to the piston rod 1, by a connection part 15, see fig. 4 or fig. 8.

This connection part can have an outer or an inner thread.

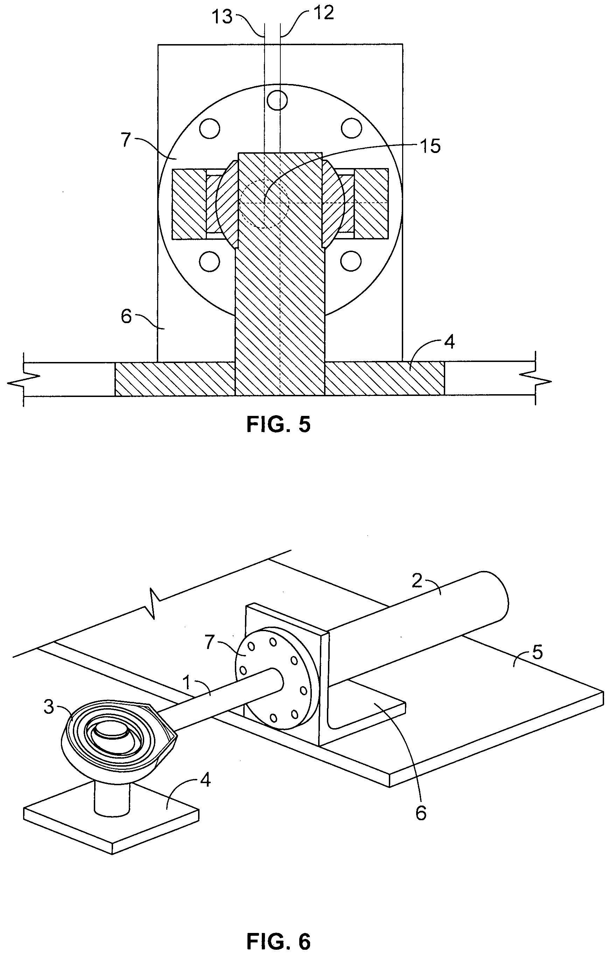

As best seen on the figures 5 and 8, the connection part has a longitudinal axis 13, whereas the bearing house has a centre line 12.

The centre line 12 and the longitudinal axis 13 are displaced from each other.

This means that if the plate 4 is moved up or downwards (taking a radial motion), by a distance 14 (see fig. 7) and shown by the double arrow 8, then the piston rod will rotate and take the position as shown in fig 7 i.e. the bearing house will be moved by an angle 16.

In this way non-wanted moments see 11 on fig. 3, between the piston rod 2, and the cylinder tube 2 will be eliminated.

As an example, the angle 16 can be 15° and the distance 15 mm.

## Claims

1. Bearing house that has a connection part (15) to which a piston rod (1) is fixable, said bearing house (3) accommodates a spherical bearing, and where the bearing house (3) has a centre line (12) lying in a plane that comprises the connection part (15), said connection part (15) has a longitudinal axis (13) **characterized in that** the centre line (12) is displaced in parallel in relation to the longitudinal axis (13), and where said centre line (12) and said longitudinal axis (13) have a distance between them that is fixed, and **in that** said spherical bearing comprises a bearing ball arranged in the housing (3).

2. Bearing house according to claim 1, **characterized in, that** the connection part (15) is a stud having an inner or an outer thread.

3. Bearing house according to claim 1 or 2, **characterized in, that** the connection part (15) has a bearing (3a) that accommodates the piston rod (1).

4. Bearing house according to one of claims 1 - 3, **characterized in, that** the bearing house (3) and bearing is formed as a gyro suspension.

5. Use of a bearing house according to one of claims 1 - 4 in pitch controlling of wind turbine blades.

## Patentansprüche

1. Lagergehäuse mit einem Verbindungsteil (15), an dem eine Kolbenstange (1) anbringbar ist, wobei das Lagergehäuse (3) ein Pendellager beinhaltet, und wobei das Lagergehäuse (3) eine Mittellinie (12) aufweist, die in einer den Verbindungsteil (15) enthaltenden Ebene liegt, wobei der Verbindungsteil (15) eine Längsachse (13) aufweist, **dadurch gekennzeichnet, dass** die Mittellinie (12) parallel versetzt ist relativ zu der Längsachse (13), und wobei die Mittellinie (12) und die Längsachse (13) zwischen sich einen festen Abstand haben, und wobei das Pendellager eine im Gehäuse (3) angeordnete Lagerkugel aufweist.

2. Lagergehäuse nach Anspruch 1, **dadurch gekennzeichnet, dass** der Verbindungsteil (15) ein Stift mit Innen- oder Außengewinde ist.

3. Lagergehäuse nach Anspruch 1 oder 2, **dadurch gekennzeichnet, dass** der Verbindungsteil (15) ein Lager (3a) aufweist, das die Kolbenstange (1) aufnimmt.

4. Lagergehäuse nach einem der Ansprüche 1 bis 3, **dadurch gekennzeichnet, dass** das Lagergehäuse (3) und Lager als Gyro-Aufhängung ausgebildet sind.

5. Verwendung eines Lagergehäuses nach einem der Ansprüche 1 bis 4 bei der Neigungssteuerung von Windturbinen-Flügeln.

## Revendications

1. Boîtier de palier comportant une partie de liaison (15) à laquelle peut être fixée une tige de piston (1), ledit boîtier de palier (3) recevant un palier sphérique, et dans lequel le boîtier de palier (3) comporte une ligne centrale (12) se trouvant dans un plan comprenant la partie de liaison (15), ladite partie de liaison (15) comporte un axe longitudinal (13), **caractérisé en ce que** la ligne centrale (12) est déplacée en parallèle en relation avec l'axe longitudinal (13), et dans lequel ladite ligne centrale (12) et ledit axe longitudinal (13) ont une distance entre eux qui est fixe, et **en ce que** ledit palier sphérique comprend une bille de roulement agencée dans le boîtier (3).

2. Boîtier de palier selon la revendication 1, **caractérisé en ce que** la partie de liaison (15) est un goujon comportant un taraudage interne ou un filetage externe.

3. Boîtier de palier selon la revendication 1 ou 2, **caractérisé en ce que** la partie de liaison (15) comporte un palier (3a) qui reçoit la tige de piston (1).

4. Boîtier de palier selon l'une des revendications 1 à 3, **caractérisé en ce que** le boîtier de palier (3) et le palier se présentent sous la forme d'une suspension gyroscopique.

5. Utilisation d'un boîtier de palier selon l'une des revendications 1 à 4 dans la commande de pas de pales d'éolienne.
